# EUROPEAN PATENT APPLICATION

(11) **EP 4 814 732 A1**
(43) Date of publication of application: **30.09.2026**
(21) Application number: 25167067.5
(22) Date of filing: 28.03.2025
(51) Int. Cl.: G06F 13/38, G05B 19/042, G06F 13/40, G06F 13/42, H04L 12/10, H04L 12/40, H04B 3/54

(54) **SYSTEM AND METHOD FOR COMMUNICATION BETWEEN A LEVEL SWITCH FIELD DEVICE AND A CONTROLLER IN A FIELD DEVICE COMMUNICATION SYSTEM**

(71) Applicant: Rosemount Tank Radar AB, 435 23 Mölnlycke (SE)
(72) Inventor: LINDEBLAD, Jonas, 445 36 Bohus (SE)
(74) Representative: Kransell & Wennborg KB

(57) **Abstract**

A field device communication system (100) comprising: a level switch sensor (102), comprising, a first 10BASE-T1L physical layer, PHY, chip (104); a first self-oscillating element (106) configured to generate a first frequency signal (200) indicative of a sensed level state and to output the first frequency signal to the first 10BASE-T1L PHY chip via a Media-Independent Interface (MII); and a second self-oscillating element (108) configured to generate a second frequency signal (202) forming a trigger signal (203), and to provide the trigger signal to the first 10BASE-T1L PHY chip to trigger a transmission of the first frequency signal; a controller (120), comprising a second 10BASE-T1L physical layer, PHY, chip (122), and processing circuitry (124) configured to receive and process M II-signals from the level switch sensor via the second 10BASE-T1L PHY chip to determine a level state and sensor status, and an intrinsically safe 2-wire connection (130) connecting the first PHY-chip to the second PHY-chip, the 2-wire connection being configured to provide both power and communication.

## Description

### Field of the Invention

The present invention relates to industrial field device communication systems, particularly those utilizing 2-wire communication for process monitoring and control applications. In particular, the present invention is aimed at a level switch field device and a controller configured to communicate with the level switch field device via a 2-wire connection providing both power and communication functionality.

### Background of the Invention

Industrial process automation relies on field devices such as sensors and controllers to monitor and regulate parameters like level, pressure, temperature, and flow. These field devices must communicate efficiently with higher-level control systems to ensure accurate process control, safety, and reliability. Traditionally, field devices have used communication methods such as analog 4-20 mA signals, HART, or fieldbus protocols. While these methods are widely adopted, they can introduce installation complexity, higher costs, and limitations in data bandwidth and integration with modern industrial networks.

To address these challenges, Ethernet-based communication has gained interest in industrial applications, offering higher data rates, improved diagnostics, and seamless integration with industrial control systems.

However, conventional Ethernet solutions typically require multiple conductors for power and data transmission, making them less suitable for intrinsically safe environments or applications with strict wiring constraints. Additionally, in field-level applications such as level sensing, reliable and efficient signal transmission is critical to ensure accurate measurement and timely process control.

There is thus a need to further develop field device communication systems that enables both power and data transmission over a simple 2-wire connection, preferably reducing complexity while ensuring long-distance communication and compatibility with modern industrial networks. Such a system should be capable of reliable signal transmission, particularly in level sensing applications, where the measured process variable must be accurately represented and transmitted to a controller for further processing and decision-making.

### Summary

In view of above-mentioned problems, it is an object of the present invention to provide an improved field device communication system.

According to a first aspect of the invention, there is provided a field device communication system comprising: a level switch sensor, comprising, a first 10BASE-T1L physical layer, PHY, chip; a first self-oscillating element configured to generate a first frequency signal indicative of a sensed level state and to output the first frequency signal to the 10BASE-T1L PHY chip via a Media-Independent Interface; and a second self-oscillating element configured to generate a second frequency signal forming a trigger signal, and to provide the trigger signal to the 10BASE-T1L PHY chip to trigger a transmission of the first frequency signal; a controller, comprising a second 10BASE-T1L physical layer, PHY, chip, and processing circuitry configured to receive and process MII-signals from the level switch sensor via the second 10BASE-T1L PHY chip to determine a level state and sensor status, and an intrinsically safe 2-wire connection connecting the first PHY-chip of the level switch sensor to the second PHY-chip of the controller, the 2-wire connection being configured to provide both power and communication.

The present invention is based on the realization that a field device communication system that enables efficient and reliable communication between a level switch sensor and a controller over an intrinsically safe 2-wire connection can be achieved by utilizing 10BASE-T1L physical layer (PHY) chips in both the sensor and the controller. The system thereby allows for long-distance, low-power communication without the use of a MAC (medium access control) or other more complex and costly processing units. The 2-wire connection serves a dual purpose, providing both power and data communication, which reduces wiring complexity and simplifies installation in industrial environments where minimizing cabling is a key concern.

The first self-oscillating element in the level switch sensor, which generates a frequency signal representing the sensed level state, can be transmitted directly via the Media-Independent Interface (MII) to the PHY chip.

In addition to the level-state signal, the invention includes a second self-oscillating element that forms a trigger signal for transmission of the first frequency signal. As will be described in more detail, this trigger signal enables what in effect is continuous data transmission between the sensor and the controller even though Ethernet is a packet-based communication protocol, ensuring that the first frequency signal can be transmitted continuously.

The controller includes processing circuitry that receives and processes the MII signals transmitted from the sensor. By interpreting the first frequency signal, the controller determines the level state, ensuring that the system provides accurate and timely level measurement data. The centralized processing in the controller allows for efficient signal handling, reducing the computational burden on the sensor and enabling a simplified sensor design with lower power consumption.

A further advantage of the invention is the intrinsically safe 2-wire connection, which allows the system to be deployed in hazardous environments. By combining power and data transmission into a single connection, the system reduces installation complexity and eliminates the need for separate power lines while providing additional functionality by means to the two PHY-chips.

Overall, the invention offers a robust and efficient solution for level measurement in industrial automation. By combining self-oscillating signal generation, continuous data transmission, and an intrinsically safe power and communication link, the system enhances operational reliability, reduces wiring complexity, and ensures accurate level measurement.
A continuous transmission enables the transfer of frequency data in its raw form, eliminating the need for digitization of the frequency value into bits or bytes by either the sender or the receiver. This reduces system complexity by removing the necessity for converting frequency data to and from digital bit streams. To enhance reliability, a low-pass filter may be applied to the raw data, allowing it to remain interpretable even in the presence of consecutive bit errors. A filtering mechanism would ensure that multiple bit faults do not disrupt the continuity of the transmitted signal, maintaining stable and accurate communication. A field device should in general be understood to include any device that determines a process variable and communicates a measurement signal indicative of that process variable to a remote location. Examples of field devices include devices for determining process variables such as filling level, temperature, pressure, fluid flow etc. In the present context, the field device is a level switch where the first frequency signal is indicative of a sensed level state, i.e. if the level switch is in a wet state (submerged or covered by a product) or in a dry state (in air or other ambience).

According to an example embodiment, the period duration of the second frequency signal is shorter than a first predetermined threshold time. In particular, the first predetermined threshold time is less than a timeout limit of a Receive Data Valid, RX-DV, input of the second PHY-chip. By ensuring that the trigger signal remains within the allowable timing window of the RX-DV input, the system prevents unintended timeouts that could disrupt communication. Keeping the trigger signal below this limit ensures that transmissions remain valid and that the controller continuously recognizes incoming data without interruption due to timeout.

According to an example embodiment, the duration of a low state of the trigger signal exceeds a second predetermined threshold time. In particular, the second predetermined threshold time is at least as long as an interpacket gap of a Receive Data Valid, RX-DV, input of the second PHY-chip. Ensuring that the low state duration of the trigger signal is at least as long as the interpacket gap required by the PHY-chip ensures compliance with timing constraints, allowing the PHY-chip to reset the allowed receive time for RX-DV.

According to an example embodiment, the processing circuitry of the controller further comprises a low-pass filter configured to attenuate the trigger signal. By configuring the low-pass filter to attenuate the trigger signal provided by the second self-oscillating element, the trigger signal resetting the receive timeout will not be detected in the filtered frequency signal at the controller, and will thereby not interfere with data interpretation.

According to an example embodiment, the first self-oscillating element is connected to a transmit data pin, TX_Dn, of the first PHY-chip. Using this dedicated pin ensures that the frequency signal representing the level state is transmitted correctly through the PHY-chips, adhering to standard signal handling protocols. Assigning the self-oscillating element to TX_Dn, i.e. a selected one of the four available data channels TX_D[0-3], provides a structured approach to signal transmission, preventing interference with control or auxiliary signals.

According to an example embodiment, the trigger signal formed by the second self-oscillating element is connected to a transmit enable pin, TX_EN, of the first PHY-chip. This connection ensures that the trigger signal effectively enables data transmission, allowing the system to operate within MII timing constraints. By associating the trigger signal with TX_EN, unintended continuous transmissions causing timeout of RX-DV are prevented. The second self-oscillating element may be connected to a transmit enable pin, TX_EN, via a logic trigger system that is configured to form a trigger signal fulfilling the timing requirements of the aforementioned interpacket gap and RX_DV timeout.

According to an example embodiment, the controller is configured to receive and analyze the first frequency signal and a live-signal via the second 10BASE-T1L PHY chip, determine fault conditions based on one or more of an absence of the first frequency signal at the expected periodic interval, a deviation of the first frequency signal from an expected resonance frequency range, a fault state of the live-signal or a loss of link status from the first 10BASE-T1L PHY chip, and generate an alert signal or store a fault log in response to detecting a fault condition. To analyze the second frequency signal and to determine fault conditions, the second frequency signal is connected to a TX_Dn pin of the first PHY chip. By monitoring transmitted signals, the controller can detect sensor malfunctions, signal degradation, or connection failures in real time. The ability to compare the received signals against expected patterns ensures early fault detection, reducing the likelihood of unnoticed failures. A frequency of the first self-oscillating element outside of a predetermined frequency range may for example be indicative of a sensor fault. Moreover, the in the present description a low state of the live-signal is indicative of a fault, but the system may equally well be implemented so that a high state of the live-signal is indicative of a fault.

According to an example embodiment, the alert signal is provided via a local indicator on the controller. A built-in visual or auditory indicator immediately notifies personnel of a detected fault, facilitating faster troubleshooting and minimizing downtime. The local indicator may for example be an LEDs, a buzzers, or a display screen. The controller is typically used for controlling relays indicating a state of the level switch sensor, ie, wet, dry or fault.

According to an example embodiment, the level switch sensor is configured to detect a fault in the level switch sensor and set the live-signal to a low state in response to the detected fault. This active fault indication allows the controller to recognize a sensor failure immediately, avoiding the risk of processing invalid or misleading data. The live-signal can be formed using the second frequency signal and a logic system having faults as additional input, and be transmitted on a free TXDn pin of the first PHY chip, to be received by an available RXDn pin on the second PHY chip.

According to an example embodiment, the controller is further configured to transmit a proof-test activation signal to the level switch sensor via the second 10BASE-T1L PHY chip, and in response to receiving the activation signal, the level switch sensor is configured to set the first frequency signal to a predefined test state to simulate a fault condition. This functionality enables verification of the system's ability to detect and respond to faults without having to access the level switch sensor as such.

The level switch sensor may for example be configured to set the first frequency signal to a low state by turning off power to the first self-oscillating element representing the sensed level state. Disabling power to the oscillating element ensures that the proof-test scenario closely mimics an actual sensor failure, providing a realistic test condition for verifying system integrity. This approach allows the controller to confirm that relevant failure detection and response mechanisms function as expected.

According to an example embodiment, the controller may further be configured to: transmit a proof-test activation signal to the level switch sensor via the second 10BASE-T1L PHY chip; in response to receiving the activation signal, the level switch sensor is configured to simulate a fault causing the live-signal to go to a fault-state. It is thereby possible to simulate different faults of the sensor by forcing the live-signal to go to a fault-state as a result of the simulated fault.

According to a second aspect of the invention, there is provided a method for performing a proof-test in a field device communication system comprising: a level switch sensor, comprising, a first 10BASE-T1L physical layer, PHY, chip; a first self-oscillating element configured to generate a first frequency signal indicative of a sensed level state and to output the first frequency signal to the 10BASE-T1L PHY chip via a Media-Independent Interface; and a second self-oscillating element configured to generate a second frequency signal forming a trigger signal, and to provide the trigger signal to the 10BASE-T1L PHY chip to trigger a transmission of the first frequency signal; a controller, comprising a second 10BASE-T1L physical layer, PHY, chip, and processing circuitry configured to receive and process MII-signals from the level switch sensor via the second 10BASE-T1L PHY chip to determine a level state and sensor status, and an intrinsically safe 2-wire connection connecting the first PHY-chip of the level switch sensor to the second PHY-chip of the controller, the 2-wire connection being configured to provide both power and communication, wherein the method comprises, by the controller: transmitting a proof-test activation signal to the level switch sensor via the second 10BASE-T1L PHY chip; and by the level switch sensor, simulating a fault condition in the level switch sensor in response to receiving the proof-test activation signal.

Effects and features of the second aspect of the invention are largely analogous to those described above in connection with the first aspect of the invention.

Further features of, and advantages with, the present invention will become apparent when studying the appended claims and the following description. The skilled person realize that different features of the present invention may be combined to create embodiments other than those described in the following, without departing from the scope of the present invention.

### Brief Description of the Drawings

These and other aspects of the present invention will now be described in more detail, with reference to the appended drawings showing an example embodiment of the invention, wherein:
Fig. 1 is a schematic block diagram of a field device communication system comprising a level switch sensor according to an example embodiment;
Fig. 2 schematically illustrates signals in a field device communication system according to an example embodiment;
Figs. 3A-B schematically illustrate a block diagram and functionality of a level switch sensor in a field device communication system according to an example embodiment;
Fig. 4 schematically illustrates signals in a field device communication system according to an example embodiment;
Figs. 5A-B schematically illustrate a block diagram and functionality of a controller in a field device communication system according to an example embodiment;
Fig. 6 is a schematic circuit diagram illustrating functionality of the field device communication system according to an example embodiment;
Fig. 7 is a schematic circuit diagram illustrating functionality of the field device communication system according to an example embodiment; and
Fig. 8 is a flow chart outlining steps of a method according to an example embodiment.

### Detailed Description of Example Embodiments

In the present detailed description, various embodiments of the system and method according to the present invention are mainly described with reference to a level switch sensor and a controller configured to communicate over a 2-wire connection that provides both power and data transmission. While the described embodiments focus on this specific application, it should be understood that the principles of the invention may also be applicable to other field device communication systems that utilize similar architectures.

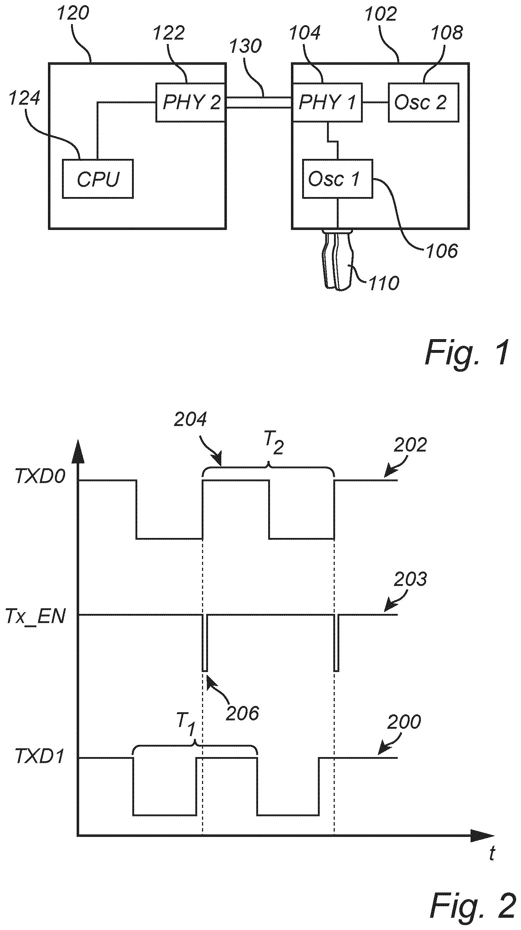

Fig. 1 shows a block diagram of an example embodiment of the field device communication system 100, which includes a level switch sensor 102 and a controller 120 connected via an intrinsically safe 2-wire connection 130. The 2-wire connection 130 is configured to provide both power and data communication.

Fig. 2 schematically illustrates first and second frequency signals 200, 202 used in the field device communication system 100, where the first frequency signal 200 has a period *T₁* and the second frequency signal 202 has a period *T₂*. The signals are not shown to scale and the purpose of the graph is to illustrate the relevant properties of the signals.

The level switch sensor 102 comprises a first 10BASE-T1L physical layer PHY chip 104, a first self-oscillating element 106, and a second self-oscillating element 108. The first self-oscillating element 106 is configured to generate a first frequency signal 200 having a frequency f₁ (f₁=1/T₁) indicative of a sensed level state. The frequency f₁ of the first frequency signal 200 thereby represents the status of the level switch sensor 102, such as a vibrating fork sensor 110, where the frequency will change depending on properties of the media which the sensor is in contact with. In the present example, the first frequency f₁ is typically in the range of 800 Hz to 1500 Hz, but the described system may equally well be used in other frequency ranges.

The first frequency signal 200 is output to the first 10BASE-T1L PHY chip 104 via a Media-Independent Interface (MII), here using the TXD1 port of the first PHY-chip 104. The Media-Independent Interface is a standard interface that allows the transfer of signals between the physical layer and other system components, enabling the first frequency signal 200 to be transmitted over the 2-wire connection 130 to the controller 120. The 10BASE-T1L standard is part of the IEEE 802.3cg-2019 Ethernet specification and is designed specifically for industrial and building automation applications. It enables Ethernet communication over a single twisted-pair cable with a reach of up to 1000 meters while supporting data transmission speeds of 10 Mbps. The 10BASE-T1L PHY chip 104 is responsible for the physical layer (OSI Layer 1) operations, including signal modulation, transmission, and reception over the 2-wire connection 130. As the physical layer component, the PHY chip 104 converts digital data from the Media-Independent Interface into a physical signal that can be transmitted over the cable. Similarly, a second PHY-chip 122 located in the controller 120 receives physical signals from the 2-wire connection 130 and converts them back into digital data for processing by the controller 120.

The Media-Independent Interface MII is a standard interface used to connect the PHY chip 104 to higher-level components, such as the processing circuitry 124 in the controller 120. The MII provides a standardized method for data exchange between the physical layer and the data link layer (or in this case, directly to processing components since no data link layer is used). The MII interface allows the first frequency signal 200 generated by the first self-oscillating element 106 to be transmitted efficiently over the 2-wire connection 130 as raw frequency data instead of a digitized value representation of the frequency.

The physical layer is the lowest layer of the Open Systems Interconnection (OSI) model and is responsible for the physical connection between devices. It handles the transmission and reception of raw bit streams over the physical medium, including signal encoding, modulation, and synchronization. The physical layer operates independently of higher-layer protocols and focuses solely on ensuring that data is accurately transmitted between devices. In the present system 100, the physical layer comprises the 10BASE-T1L PHY chips 104 and 122, which manage the electrical and timing characteristics of the signals transmitted over the 2-wire connection 130. Since the system 100 operates exclusively at the physical layer, there is no requirement for higher-level Ethernet protocols, making the communication approach highly efficient and suitable for continuous frequency-based data transmission.

The second self-oscillating element 108 is configured to generate a second frequency signal 202 used to form a trigger signal 203 provided to the first 10BASE-T1L PHY chip 104 to trigger a transmission of the first frequency signal 200. The second frequency signal 202 has a second frequency f₂ (f₂=1/T₂).

The second PHY chip 122 arranged in the controller 120 is configured to receive MII signals transmitted from the level switch sensor 102 via the 2-wire connection 130. The processing circuitry 124 of the controller 120 is configured to process the received MII signals to determine the level state and sensor status based on the received signals. By analyzing the received signals, or by detecting a loss of signal, the controller 120 can interpret the measurement data from the level switch sensor 102 and assess whether the sensor 102 is operating under normal or abnormal conditions.

The intrinsically safe 2-wire connection 130 not only supports data transmission between the level switch sensor 102 and the controller 120 but also supplies power to the level switch sensor 102. The use of the 2-wire connection 130 reduces the need for additional wiring and ensures compliance with intrinsic safety standards. Thereby, the 10BASE-T1L technology allows the system 100 to operate over long distances while maintaining low power consumption, making it suitable for applications in hazardous industrial environments.

The processing circuitry 124 of the controller 120 may include a microprocessor, microcontroller, programmable digital signal processor or another programmable device. The processing circuitry may also, or instead, include an application specific integrated circuit, a programmable gate array or programmable array logic, a programmable logic device, or a digital signal processor. Where the processing circuitry includes a programmable device such as the microprocessor, microcontroller or programmable digital signal processor mentioned above, the processor may further include computer executable code that controls operation of the programmable device.

Fig. 2 schematically illustrates example signal properties of the first frequency signal 200, the second frequency signal 202, and the trigger signal 203. The first frequency signal 200 is provided on the TXD1 pin of the first PHY-chip 104, the second frequency signal 202 on the TXD0 pin, and the trigger signal 203 on the TX_EN pin. The second frequency signal 202 forms a trigger signal 203 for the transmission of the first frequency signal for maintaining stable and reliable communication between the level switch sensor 102 and the controller 120 using logic circuitry, an example of which will be described in the following. The period duration 204 of the second frequency signal 202 is shorter than a predetermined threshold time acting as an upper limit on the period duration 204, allowing the second frequency signal 202 to form a trigger signal 203 via logic circuitry, enabling transmission of the first frequency signal 200.

In particular, the first predetermined threshold time is set to be shorter than a timeout limit of a Receive Data Valid, RX-DV, input of the second PHY chip 122. The RX-DV input is part of the Media-Independent Interface that indicates when valid data is being received by the PHY chip 122. By keeping the period duration 204 of the second frequency signal 202 shorter than the RX-DV timeout limit, the system 100 avoids unintended timeouts that could disrupt the communication link between the sensor 102 and the controller 120. The RX-DV timeout limit is generally associated with the maximum allowed frame length or the longest acceptable data reception window of the PHY chip 122, ensuring that data transmission remains valid and uninterrupted.

In particular, the RX_DV timeout is primarily linked to the maximum allowed Ethernet frame length of approximately 1500 bytes, resulting in a guaranteed maximum period of less than 1224 µs. Although the PHY chip allows for an extended margin of up to 4000 µs (4 ms), resulting in a second frequency f₂ of 250 Hz, the threshold duration can be generally described as a period shorter than the RX_DV timeout, within the range of the maximum frame length. In practice, the second frequency f₂ may be selected to be in the range of 1000 Hz - 1300 Hz.

The trigger signal 203 features a low state with a duration 206 that exceeds a second predetermined threshold time. This low state duration 206 is an important characteristic of the trigger signal 203, allowing the PHY chip 122 to properly reset between data transmissions. The second predetermined threshold time is set to be at least as long as an interpacket gap of a Receive Data Valid, RX-DV, input of the second PHY-chip 122. The interpacket gap is the minimum interval required between two Ethernet frames, allowing the receiver to prepare for the next data packet. Ensuring that the low state duration 206 of the second frequency signal 202 meets or exceeds the interpacket gap requirement enables the system 100 to maintain compliance with Ethernet-based timing standards. This configuration enhances the reliability of data transmission by preventing the second PHY-chip 122 from timing out due to a too long continuous transmission. The interpacket gap is in practice configurable in registers of the PHY-chip but should typically be above 4.7 µs. In standard Ethernet, the gap would need to be at least 9.6 µs, but since the described implementation does not strictly follow an Ethernet packet structure, it is not required to comply with this requirement. Instead, it is desirable to have the low state duration as short as possible to allow the received signal to be seen as a continuous signal.

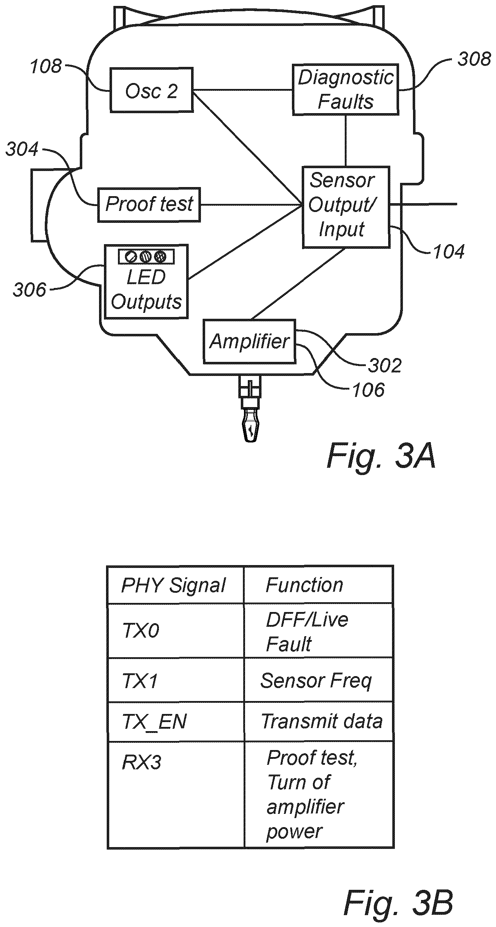

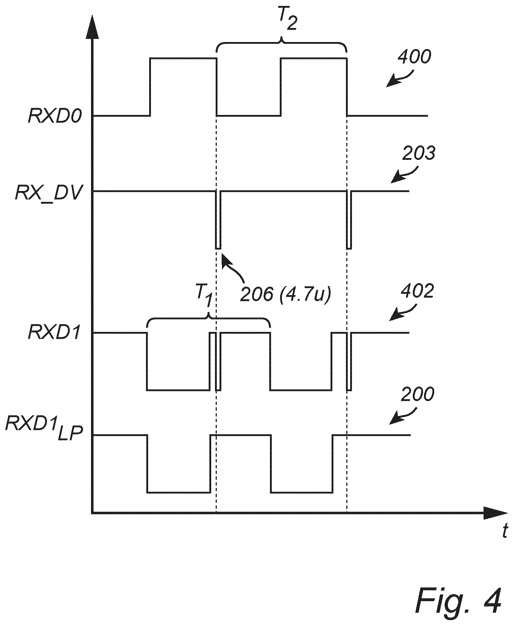

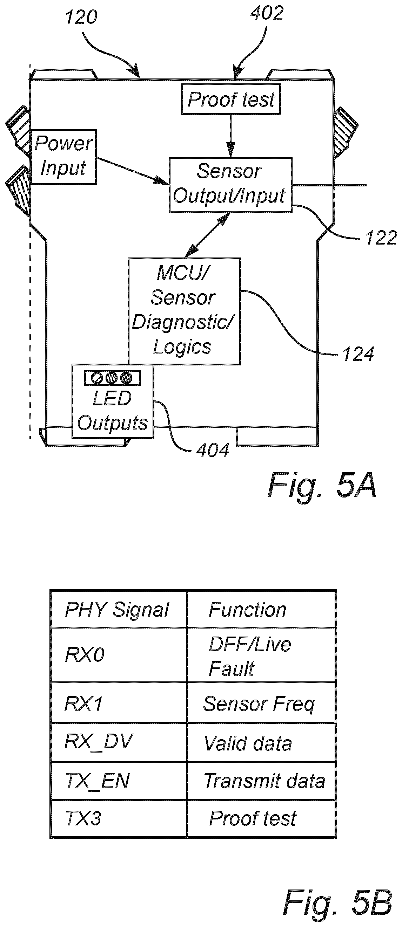

Fig. 3A schematically illustrate functional blocks of the level switch sensor 102 and the table of Fig. 3B outlines use of selected pins of the first PHY-chip 104. Fig. 4 in turn schematically illustrates signals received by the second PHY-chip in the controller 120 whereas Figs. 5A-B schematically illustrate functional blocks of the controller 120 and the table of Fig. 5B outlines use of selected pins of the second PHY-chip 122.

In addition to the described first PHY-chip 104, and first and second self-oscillating elements 106, 108, the level switch sensor 102 may further comprise proof-test functionality 304, a LED status indicator 306 indicating a status of the level switch sensor 102, and diagnostics functionality 308 which will be described in further detail in the following. Moreover, the level switch sensor 102 comprises an amplifier 106 providing power to the vibrating fork 110.

As illustrated in Fig. 3B, the first self-oscillating element 106 is connected to a transmit data pin TX_Dn of the first PHY chip 104, here TXD1. The transmit data pins TX_Dn are part of the Media-Independent Interface and TXD1 is here used to transmit the first frequency signal 200 generated by the first self-oscillating element 106. This connection allows the first frequency signal 200, having a frequency f₁ indicative of the sensed level state, to be effectively modulated and transmitted over the intrinsically safe 2-wire connection 130 to the controller 120. The direct connection to the TX_Dn pin ensures that the frequency-based signal is transmitted with minimal signal processing, preserving its accuracy and reliability throughout the communication process.

The second self-oscillating element 108 is connected to a transmit enable pin TX_EN of the first PHY chip 104 via logic circuitry to provide the trigger signal 203, as illustrated in Fig. 2. The transmit enable pin TX_EN controls the activation of data transmission to minimize the down-time between Ethernet packages effectively allowing a continuous stream of data. The second frequency signal 202 generated by the second self-oscillating element 108 forms the trigger signal 203, and when the trigger signal 203 is active, the TX_EN pin is enabled, allowing the first frequency signal 200 on the TX_Dn pin to be transmitted. Conversely, when the trigger signal 203 is in a low state, the TX_EN pin is not active, preventing the transmission of the first frequency signal 200. This setup ensures that data transmission in practice can be seen as continuous.

Fig. 3A schematically illustrate corresponding functional blocks of the controller 120 and Fig. 3B outlines use of selected pins of the second PHY-chip 122. In addition to the described second PHY-chip 122, the controller 120 comprises proof-test activation circuitry 402 and a LED status indicator 404. The proof-test activation circuitry 402 may for example be provided in the form of a physical button on the controller, which when activated initiates a proof-test of the level switch sensor via the second PHY-chip 122.

Fig. 5B shows the corresponding operation at the second PHY-chip 122 in the controller 120. A live-signal 400 is received on RX0 and the first frequency signal 200 representative of the sensor frequency f₁ is received on RX1. The received signals are subsequently processed by the processing circuitry 124, which monitors the status of the live-signal 400 on RX0 to determine that received data is valid. The RX_DV pin of the second PHY-chip 122 is connected to the TX_EN pin of the second PHY-chip 122 to enable data to be transmitted to the controller 120. The coordination between the TX_EN and TX_Dn pins of the first PHY chip 104 and the receiving components of the second PHY chip 122 thereby enables the continuous transmission of the first frequency signal 200.

The live-signal 400 is monitored to track the sensor status where a constant low signal is indicative of a fault. An oscillating signal which here is formed from the second frequency signal 202 via logic circuitry indicates a live/everything is OK status. Fig. 5B further illustrates that a proof-test signal can be sent to the sensor 102 via the TX3 pin.

The processing circuitry 124 of the controller 120 may further include a low-pass filter configured to attenuate the trigger signal 203 formed from the second frequency signal 202. The low-pass filter may for example be hardware implemented in the processing circuitry 124, or it may be provided as separate circuitry providing the required low-pass filtering of the signals received by the second PHY-chip 122 from the level switch sensor 102. As illustrated in Fig. 4, the signal received on RXD1 of the second PHY-chip 122 is low when the trigger signal 203 is low since no transmission is possible during reset of the RX_DV timeout. By applying a low-pass filter to the received signal 402, the low periods of the trigger signal 203 can be attenuated and thereby the first frequency signal 200 can be reconstructed by the controller 120.

The carrying signal of the physical layer of the 10BASE-T1L PHYs has a frequency of 2.5Mhz (400ns period time), while a low pass filter of 4.7µs, fulfills the interpacket gap timing 206, to filter out losses of data shorter than the interpacket gap 206. This allows for more than 11 bits (400ns*11 = 4.4µs < 4.7µs) of lost data before the controller 120 would notice a change in the received frequency. The range of transmitted signals (1st and 2nd frequency) are typically less than 2.5kHz (having a period time of >0.4ms) which sets the low pass filter to < 85 times (0.4ms/4.7µs) and the frequency signal is practically unaffected.

The MII can transfer and receive 4 bits (nibbles, half-bytes) at each clock cycle. The clock cycle of 10BASE-T1L is 2.5MHz, resulting in a data stream of 10Mbit/s. The transferred data TXD[0..3] is sent when TX_EN is active and clocked by TX_CLK. At the receiving PHY, the data can be read at RXD[0..3] while the PHY interpret the data as valid (RX_DV) and is clocked by the RX_CLK. The PHY is responsible for transferring the MII data over the physical layer, including sampling, Manchester encoding, clock generation, clock extraction, package handling and everything else that is specified in IEEE 802.3cg-2019 or similar. The skilled person would realize that similar solution could be found using other MII-implementations e.g. reduced media independent interface (RMII) or other IEEE 802 standards e.g. 10BASE-TX.

The illustrated live-signal 400 is also low-pass filtered to attenuate the impact of the trigger signal 203, even though Fig. 4 does not illustrate the unfiltered signal.

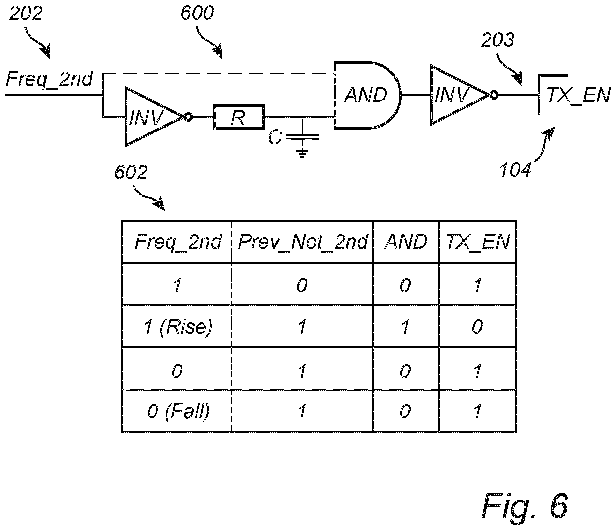

Fig. 6 is a circuit schematic 600 and logic table 602 describing how the resend functionality is triggered using the second frequency signal 202 to form a trigger signal 203 connected to the TX_EN pin of the first PHY-chip 104. The described logic circuitry 600 illustrates that the PHY transmit signal (TX_EN) is reset to low at the rising edge of the second frequency signal 202 during each period. The period time of the second frequency signal is shorter than the RX_DV timeout of the PHY, and the logic circuitry 600 comprises a low pass filter (RC) which is tuned to give a low output having a duration which is longer than the interpacket gap (4.7µs) on the TX_EN signal by comparing the current state (second frequency) and the filtered value of the inverted second frequency signal through an AND gate. The resulting trigger signal 203 is then provided to the TX_EN pin of the first PHY-chip 104.

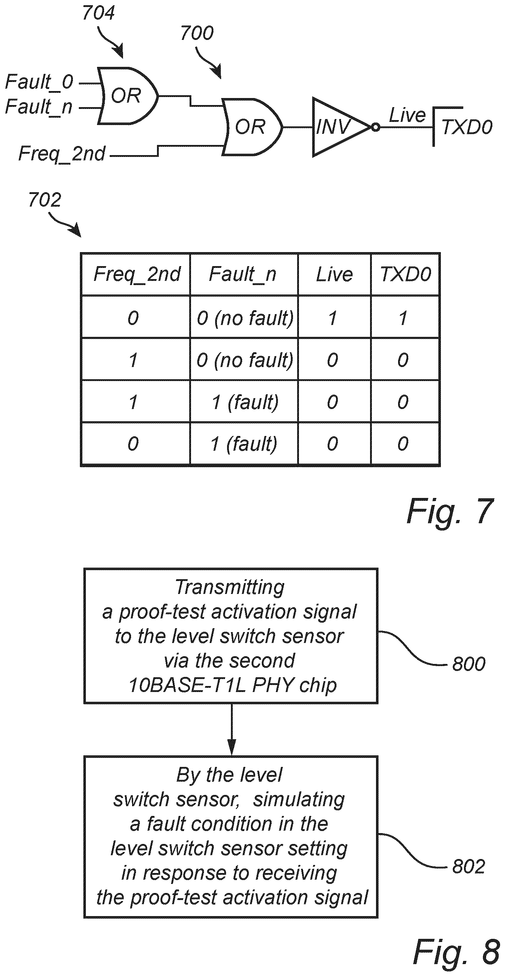

Fig. 7 is a circuit schematic 700 and logic table 702 describing how the live-signal 400 is formed using the second frequency signal 202, where the live-signal 400 is connected to a data pin of the first PHY-chip 104, here TXD0, and is received by RXD0 of the second PHY-chip 122 in the controller 120. When there are no faults, the live-signal 400 will be an inverted version of the second frequency signal 202. A detected fault of the sensor (Fault_0,... Fault_n), not limited to input or internal voltages, will indicate a fault via the first OR gate 704 which can have multiple inputs, and as long as the fault persists, the live-signal 400 will be low (zero), indicating a sensor fault to the controller 120.

The skilled person readily realize that the signal properties provided by the described logic circuits 600, 700 can be achieved by many different combinations of logic elements, and that the illustrated circuit schematics are provided as an example and illustration of the desired functionality.

The field device communication system 100 further includes diagnostics functionality that allows the controller 120 to monitor the operational status of the level switch sensor 102 and to detect potential fault conditions. The controller 120 is configured to receive and analyze the first frequency signal 200 and the live-signal 400 signal via the second 10BASE-T1L PHY chip 122.

The processing circuitry 124 of the controller unit 120 continuously monitors the received signals to identify specific fault conditions, where one diagnostic function is detecting the absence of the trigger signal 203. The trigger signal 203, connected to the transmit enable pin TX_EN of the first PHY chip 104, also serves as a signal that not only triggers data transmission but also indicates that the sensor 102 is operating correctly. If the trigger signal 203 does not arrive within the expected timeframe to reset the receive timeout of the second PHY-chip, the controller unit 120 interprets this as a potential fault in the sensor 102, as it may indicate a malfunction or a communication disruption.

Another diagnostic capability involves analyzing the first frequency signal 200 for deviations from an expected resonance frequency range. The first frequency signal 200, connected to the transmit data pin TXD1 of the first PHY chip 104, reflects the operational status of the vibrating fork sensor used in the level switch sensor 102. If the received frequency deviates significantly from the expected range of frequencies for the media in which the sensor 102 operates, it may indicate issues such as mechanical damage to the sensor, buildup or contamination on the vibrating fork, or calibration errors. Such deviations are detected by comparing the received frequency against predefined frequency thresholds stored in the processing circuitry 124.

The controller unit 120 is also capable of identifying a loss of link status from the first 10BASE-T1L PHY chip 104. The link status is an indicator of the physical and communication integrity between the sensor 102 and the controller unit 120. A loss of link status might occur due to cable disconnection, power supply issues, or severe communication interference. The PHY chip 122 monitors link integrity through standardized status signals, which the processing circuitry 124 evaluates to ensure a continuous and healthy communication channel. The controller 120 also receives the described live-signal 400 to detect other faults in the sensor 102.

Upon detecting any of these fault conditions, whether due to a missing trigger signal 203, low live-signal 400, an abnormal frequency signal, or a lost link status, the processing circuitry 124 can be configured to generate an alert signal or to log the fault in a fault log. The alert signal can activate a local indicator on the controller unit 120, such as an LED 404 or an audible alarm, providing feedback to operators. Additionally, the system 100 may store detailed fault information in a log file, allowing for later diagnostics and maintenance analysis.

The level switch sensor 102 may further be configured to detect internal faults through self-monitoring, which may include monitoring power supply levels, signal integrity, and internal diagnostics of the vibrating fork sensor. When detecting a fault, the level switch sensor 102 is configured to set the live-signal 400 to a low state. It would also be possible to use the trigger signal to indicate a fault condition by setting the second frequency signal 202 to a low state, thereby effectively interrupting the communication link to the controller unit 120.

Setting the second frequency signal 202 to a low state thereby indicates a fault condition. The controller unit 120 can then interpret this loss of transmission resulting from timeout at the RX-DV input as an indication of a fault in the level switch sensor 102, prompting the controller to generate an alert or initiate a safety response, such as transitioning to a safe state. This live-signal approach ensures a fail-safe mechanism where the absence of a transmission is treated as a fault.

However, an advantage of using the live-signal 400 to indicate a fault condition is that the communication link is maintained, making it possible to more accurately evaluate what the fault condition may be.

In addition to fault detection, the system 100 supports proof-testing functionality to verify that the sensor 102 and controller unit 120 respond correctly to simulated fault conditions. The controller unit 120 may be configured to transmit a proof-test activation signal to the level switch sensor 102 via the second 10BASE-T1L PHY chip 122. Upon receiving this activation signal, the level switch sensor 102 sets the first frequency signal to a predefined test state. The test state is a deliberate alteration of the first frequency signal intended to simulate a fault condition. This predefined test state may involve setting the first frequency signal to a low state, a fixed frequency outside the normal operating range, or another distinct signal pattern that the controller unit 120 can recognize as a test scenario.

The proof-test allows the controller unit 120 to verify its diagnostic processes, for example by simulating fault causing the live-signal 400 to go low, ensuring that the processing circuitry 124 correctly identifies the simulated fault and triggers the appropriate response.

To execute the proof-test, the level switch sensor 102 may for example set the first frequency signal 200 to a low state by turning off power to the self-oscillating element 106. By physically disabling the self-oscillating element 106, the sensor 102 produces a signal condition that closely mimics an actual hardware failure, providing a realistic test for the controller unit 120, thereby testing the diagnostic and safety systems under conditions that resemble a real sensor fault.

Fig. 7 is a flow chart outlining the steps of a method of performing a proof-test in the field device communication system 100, the method comprising, by the controller: transmitting 800 a proof-test activation signal to the level switch sensor via the second 10BASE-T1L PHY chip 122; and by the level switch sensor 102, simulating 802 a fault condition in the level switch sensor 102 in response to receiving the proof-test activation signal. The controller 120 can then verify that the simulated fault condition in the level switch sensor 102 provides the expected response in the signals received by the controller.

Overall, the integration of fault detection and proof-testing features in the field device communication system 100 provides important safety and diagnostic capabilities enabling early detection of sensor faults and allowing for regular and easy testing of the response of the system to simulated fault conditions. Such functionality is especially valuable in industrial environments where maintaining safe operation and compliance with safety standards is essential.

Even though the invention has been described with reference to specific exemplifying embodiments thereof, many different alterations, modifications and the like will become apparent for those skilled in the art. Also, it should be noted that parts of the system and method may be omitted, interchanged or arranged in various ways, the system and method yet being able to perform the functionality of the present invention.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A field device communication system (100) comprising:
a level switch sensor (102), comprising, a first 10BASE-T1L physical layer, PHY, chip (104); a first self-oscillating element (106) configured to generate a first frequency signal (200) indicative of a sensed level state and to output the first frequency signal to the first 10BASE-T1L PHY chip via a Media-Independent Interface (MII); and a second self-oscillating element (108) configured to generate a second frequency signal (202) forming a trigger signal (203), and to provide the trigger signal to the first 10BASE-T1L PHY chip to trigger a transmission of the first frequency signal;
a controller (120), comprising a second 10BASE-T1L physical layer, PHY, chip (122), and processing circuitry (124) configured to receive and process MII-signals from the level switch sensor via the second 10BASE-T1L PHY chip to determine a level state and sensor status, and
an intrinsically safe 2-wire connection (130) connecting the first PHY-chip of the level switch sensor to the second PHY-chip of the controller, the 2-wire connection being configured to provide both power and communication.

2. The field device communication system according to claim 1, wherein the period duration (204) of the second frequency signal (202) is shorter than a first predetermined threshold time.

3. The field device communication system according to claim 2, wherein the first predetermined threshold time is less than a timeout limit of a Receive Data Valid, RX-DV, input of the second PHY-chip.

4. The field device communication system according to any one of the preceding claims, wherein the duration (206) of a low state of the trigger signal exceeds a second predetermined threshold time.

5. The field device communication system according to claim 4, wherein the second predetermined threshold time is at least as long as an interpacket gap of a Receive Data Valid, RX-DV, input of the second PHY-chip.

6. The field device communication system according to any one of the preceding claims, wherein the processing circuitry of the controller further comprises a low-pass filter configured to attenuate the trigger signal.

7. The field device communication system according to any one of the preceding claims, wherein the first self-oscillating element is connected to a transmit data pin, TX_Dn, of the first PHY-chip.

8. The field device communication system according to any one of the preceding claims, wherein the trigger signal (203) formed by the second self-oscillating element is connected to a transmit enable pin, TX_EN, of the first PHY-chip.

9. The field device communication system according to any one of the preceding claims, wherein the controller is configured to:
receive and analyze the first frequency signal and a live-signal (400) via the second 10BASE-T1L PHY chip;
determine fault conditions based on one or more of:
an absence of the first frequency signal at the expected periodic interval;
a deviation of the first frequency signal from an expected resonance frequency range;
a fault state of the live-signal (400); or
a loss of link status from the first 10BASE-T1L PHY chip; and
generate an alert signal or store a fault log in response to detecting a fault condition.

10. The field device communication system according to claim 9, wherein the alert signal is provided via a local indicator on the controller.

11. The field device communication system according to any one of the preceding claims, wherein the level switch sensor is configured to:
detect a fault in the level switch sensor; and
set a live-signal (400) to a fault-state in response to the detected fault.

12. The field device communication system according to any one of the preceding claims, wherein the controller is further configured to:
transmit a proof-test activation signal to the level switch sensor via the second 10BASE-T1L PHY chip;
in response to receiving the activation signal, the level switch sensor is configured to set the first frequency signal to a predefined test state to simulate a fault condition.

13. The field device communication system according to any one of the preceding claims, wherein the controller is further configured to:
transmit a proof-test activation signal to the level switch sensor via the second 10BASE-T1L PHY chip;
in response to receiving the activation signal, the level switch sensor is configured to simulate a fault causing the live-signal to go to a fault-state.

14. Method of performing a proof-test in a field device communication system (100) comprising:
a level switch sensor (102), comprising, a first 10BASE-T1L physical layer, PHY, chip (104); a first self-oscillating element (106) configured to generate a first frequency signal indicative of a sensed level state and to output the first frequency signal (200) to the 10BASE-T1L PHY chip via a Media-Independent Interface (MII); and a second self-oscillating element (108) configured to generate a second frequency signal 202 forming a trigger signal 203, and to provide the trigger signal to the 10BASE-T1L PHY chip to trigger a transmission of the first frequency signal;
a controller (120), comprising a second 10BASE-T1L physical layer, PHY, chip (122), and processing circuitry (124) configured to receive and process MII-signals from the level switch sensor via the second 10BASE-T1L PHY chip to determine a level state and sensor status, and
an intrinsically safe 2-wire connection (130) connecting the first PHY-chip of the level switch sensor to the second PHY-chip of the controller, the 2-wire connection being configured to provide both power and communication, wherein the method comprises, by the controller:
transmitting (800) a proof-test activation signal to the level switch sensor via the second 10BASE-T1L PHY chip; and
by the level switch sensor, simulating (802) a fault condition in the level switch sensor in response to receiving the proof-test activation signal.

15. The method according to claim 14, further comprising, by the level switch sensor, setting (702) a live-signal (400) to a fault-state in response to receiving the proof-test activation signal.
